# EUROPEAN PATENT APPLICATION

(11) **EP 1 653 402 A1**
(43) Date of publication of application: **03.05.2006**
(21) Application number: 05077424.9
(22) Date of filing: 21.10.2005
(51) Int. Cl.: G06Q 10/00

(54) **A method for performing a customs procedure**

(30) Priority: 27.10.2004 EP 04077960
(71) Applicant: SAP AG, 69190 Walldorf (DE)
(72) Inventor: Chelniak, Hans, 68766 Hockenheim (DE); Thierer, Jochen, 76646 Bruchsal (DE); Stadler, Christian, 68169 Mannheim (DE); Brunner, Stefan, 68766 Hockenheim (DE); Moschel, Andreas, 69483 Wald-Michelbach (DE)
(74) Representative: Winckels, Johannes Hubertus F.

(57) **Abstract**

A method for performing a customs procedure, including receiving at a first input interface of a data processing system an electronic logistics document, said logistics document containing logistics data of received goods, processing the logistics data in a logistics process performed by the data processing system, generating by the data processing system an electronic customs declaration; said generating including extracting from the logistics document logistics data, deriving from the extracted logistics data customs data related to a customs procedure for at least a part of the received goods and generating by the data processing system an electronic customs declaration document containing the customs data, said method further including providing said electronic customs declaration document at an output interface of the data processing system, transmitting the electronic customs declaration document to an input interface of an electronic customs clearance declaration system, receiving, from said electronic customs clearance declaration system, clearance data regarding the received goods at a second input interface of the data processing system and marking, within the data processing system, the logistics data with a first marking to signal that the customs procedure has been completed when the clearance data indicate that the customs procedure has been completed.

## Description

### FIELD AND BACKGROUND OF THE INVENTION

The invention relates to a method for performing a customs procedure, and a system suitable for performing such methods.

In the past nearly all customs processes were paper based. Meanwhile most of the national customs authorities move on to organize their processes electronically. In the EU the NCTS (New Computerized Transit System) system is defined for the transit procedure, in Germany several customs processes (i.e. free circulation) are defined in the ATLAS (Automatisiertes Tarif- und Lokales Zoll-Abwicklungs-System) definition and in the US the customs authorities are working for instance with the "Automated Commercial Environment (ACE)".

However, although the communication with the customs authorities is handled electronically, the customs processes do strongly interfere with the corresponding logistic processes. The customs procedures and the corresponding logistic processes are still separated and often handled by different systems and different organizations within a company. This decelerates both the customs processes and the logistics processes quite a lot.

Another problem is that in case of starting a new customs procedure, it may happen that in the logistics process, knowledge about the specific customs procedure the goods have to be declared for, is absent. The selection of a customs procedure is typically made by the person who is in charge of customs handling within a company. In addition, when choosing a new customs procedure it may happen that not the whole quantity of goods receipt shall be declared for in the same customs procedure. For example, only a part of the goods may have to be declared for free circulation and another part may be declared for bonded warehouse at a later point in time.

### SUMMARY OF THE INVENTION

A goal of the invention is to minimize the influence of the customs regulations on the general logistics inbound process for goods under customs surveillance and/or to minimize delays to the general logistics inbound process caused by customs procedures in order to increase the effectiveness of these logistics processes when closing a transit procedure and/or starting a new customs procedure.

Therefore the invention provides a method according to claim 1.

This provides the advantage that by the processing system the electronic customs declaration for the customs procedure is derived from the electronic logistics document of the logistics process. Further, receiving clearance data from the electronic customs declaration system by the processing system, and marking, within the data processing system, the logistics data with a first marking to signal that the customs procedure has been completed when the clearance data indicate that the customs procedure has been completed provides the advantage that within processing system the status of the corresponding customs procedure is known for the logistics process. Thus, the customs procedures and the corresponding logistic processes can both be handled by the processing system, and the influence of the customs regulations on the general logistics inbound process for goods under customs surveillance and/or delays to the general logistics inbound process caused by customs procedures are minimised.

The invention further provides a system according to claim 20.

The invention further relates to a computer program product according to claim 27. The invention further relates to an article of manufacture according to claim 28

Specific embodiments of the invention are set forth in the dependent claims. Further details, aspects and embodiments of the invention will be described below, by way of example only.

### BRIEF DESCRIPTION OF THE DRAWINGS

The invention is further elucidated with reference to the drawing, in which, by way of non-limiting example,
Fig. 1 shows a schematic representation of an example of a data processing system according to the invention; and
Fig. 2 shows an example of a flow chart of a method for performing a customs procedure according to the invention.

### DETAILED DESCRIPTION

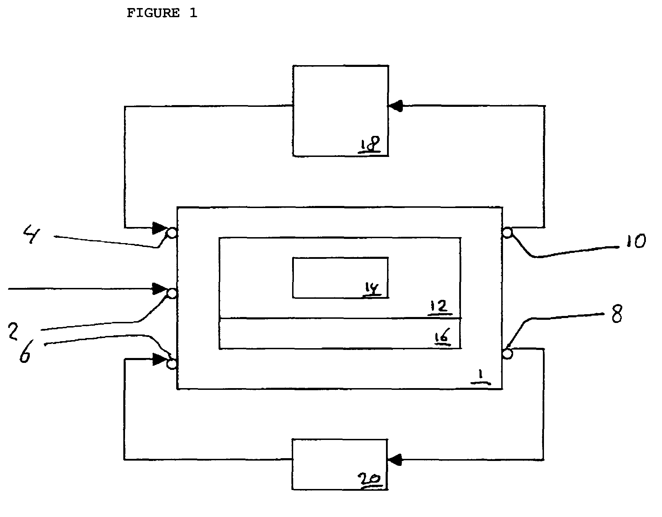

Figure 1 shows a schematic representation of an example of a data processing system 1 according to the invention. In the example of Fig. 1, the data processing system 1 includes a first input interface 2, a second input interface 4, a third input interface 6, a first output interface 8 and a second output interface 10. The data processing system 1 further includes a memory 12. The data processing system 1 further includes a processor 16 communicatively connected to the input interfaces, 2, 4, 6, the memory 12, and said output interfaces 8, 10.

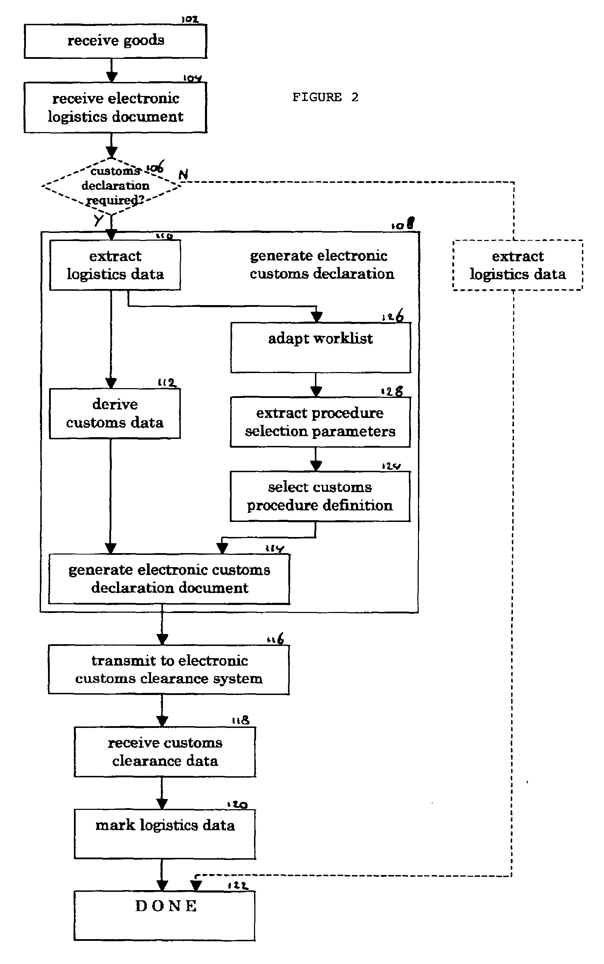

The operation of the system 1 as discussed thus far, will be elucidated referring to Figure 2, which shows an example of a flow chart of a method for performing a customs procedure according to the invention.

In a logistic process goods may be received, e.g. on the premises of a user such as a company, as indicated in step 102 of Fig. 2. Logistics data of the received goods may be contained in or entered into an electronic logistics document concerning the received goods. At a first input interface 2 of the data processing system 1 the electronic logistics document is received in step 104. In the logistic process performed by the data processing system 1 the logistics data is processed.

In step 106 is determined whether or not a customs declaration is required for the received goods. The customs declaration usually must comply with a customs procedure which is usually prescribed by a customs authority of the country in which the goods are received. The data processing system 1 may automatically determine from the logistics data whether or not a customs declaration is required for the received goods, e.g. on the basis of a country of dispatch and/or a country of origin and/or a commodity code and/or a value of the goods and/or a type of customs document that has accompanied the goods. This provides the advantage that the workload on the user of the data processing system 1 is reduced, the risk of human error is reduced and/or that it can be determined whether or not a customs declaration is required for the received goods immediately after the corresponding logistics document has been provided at the first input interface 2 of the data processing system 1. It is, however, also possible, for example when it is known beforehand that all received goods require customs declaration, e.g. when the user is only concerned with import of goods that are subject to customs declaration, that the data processing system 1 does not determine from the logistics data whether or not a customs declaration is required for the received goods but always generates a customs declaration for received goods. In this case step 106 may be omitted.

In step 108 the data processing system generates an electronic customs declaration. Generating the electronic customs declaration includes extracting logistics data from the logistics document (step 110). From the extracted logistics data customs data is derived in step 112. The customs data is related to the required customs procedure for at least a part of the received goods. It is possible that not the whole quantity of received goods shall be declared for one particular customs procedure. For example only a part of the goods may have to be declared for free circulation and another part may be declared for bonded warehouse at a later point in time. In step 114 an electronic customs declaration document is generated for the relevant part of the received goods by the data processing system 1 containing the customs data.

The customs declaration document can be communicated, e.g. transmitted, to a customs authority. The customs declaration document can be transmitted in electronic form to a customs-server associated with the customs authority. Thereto, the electronic customs declaration document is provided at the second output interface 10 of the data processing system 1. The electronic customs declaration document is for example transmitted to an input interface of an electronic customs clearance declaration system 18 (e.g. NCTS, ATLAS or ACS) in step 116. It will be clear that the customs clearance declaration system 18 by itself is associated with the customs authority. The customs declaration document must comply with the customs procedure to be suitable to be processed by the customs clearance declaration system 18. At the electronic customs clearance system 18 the electronic customs declaration is processed and customs clearance may be awarded. Customs clearance may be transmitted by the customs authority, e.g. by the customs clearance declaration system 18, to the data processing system, e.g. in electronic form. Clearance data regarding customs clearance of the received goods are received from said electronic customs clearance declaration system 18 at the second input interface 4 of the data processing system 1 (step 118). Within the data processing system 1, when the clearance data indicate that the customs procedure has been completed, the logistics data are marked accordingly with a first marking (step 120). Thereto, the processor 16 is arranged to mark the logistics data with the first marking to signal that a customs procedure has been completed when the clearance data indicate that the customs procedure has been completed. This provides the advantage that within the data processing system 1, it can easily be recognized, from the first marking to the logistics data, whether or not a customs procedure regarding the received goods corresponding to said logistics data has been completed. At this point the customs procedure is completed (step 122) and the logistic process can be resumed.

In a special embodiment, the data processing system 1 is arranged to automatically handle customs clearance. That is, the data processing system 1 is arranged to receive the clearance data in electronic form and according to the clearance data automatically mark the logistics data to signal that the customs procedure has been completed. This provides the advantage that it is possible that the logistics data are marked to signal that the customs procedure has been completed immediately upon receiving the clearance data.

It is possible that a plurality of customs procedures exist. The customs authority may e.g. prescribe different customs procedures for goods received from different countries or regions, or for different types of goods. Within the data processing system 1 a plurality of customs procedure definitions may be contained in a repository 14 stored in the memory 12 of the data processing system 1. Each customs procedure definition of the plurality of customs procedure definitions at least defines a customs declaration document type corresponding to the selected customs procedure. Preferably each customs declaration type is suitable to be processed by the electronic customs clearance declaration system.

In the example of Fig. 2 generating the electronic customs declaration (step 108) further includes selecting a customs procedure definition of the plurality of customs procedure definitions from the repository 14 stored in the memory 12 of the data processing system 1 (step 124). From the logistics data the customs data can be selected which are suitable for the selected customs procedure. The customs declaration document is subsequently generated corresponding to the customs declaration document type of the selected customs procedure definition. It is possible to add an identifier of the selected customs procedure definition to the logistics data, e.g. for future reference. Thereto, the processor 16 is arranged to add an identifier of the selected customs procedure to the logistics data.

Thus the method for performing the customs procedure, includes receiving at an input a delivery data about received goods, selecting from the delivery data customs data suitable for the selected customs process, adding an identifier of a selected customs process to the delivery data, and generating from the customs data a customs clearance (shipment) document suitable to be processed by the associated customs process.

The data processing system 1, thereto, includes an input for receiving a delivery data about received goods and a processor communicatively connected to the input, which processor is arranged to add an identifier of the selected customs process to the delivery data, to select from the delivery data customs data suitable for the selected customs process and to generate from the customs data a customs clearance (shipment) document suitable to be processed by the associated customs process.

It is also possible that a worklist is stored in the memory 12 of the data processing system. The worklist is a list including logistics data of the received goods that are necessary to create the electronic customs declaration documents required by the electronic customs clearance system. The worklist can be a virtual list in the memory 12 of the data processing system. The worklist is designed such that substantially all types of (electronic) logistics documents can be used as an input for the worklist; the interface structure between the electronic logistics document input (first input 2) and the data processing system 1 is common. The worklist provides said common interface between at least one electronic logistics document, e.g. a plurality of mutually different logistics documents, and the data processing system 1. Thereto, the worklist may comprise a number of data entry fields. Each electronic logistics document may provide a selection of data entries to the worklist. The different types of electronic logistics documents may each provide a different selection of data entries to the worklist. Hence, the interface between the worklist and the electronic logistics documents is common (generic). This provides the advantage that no separate interface structure is required for each logistics document but only a separate data extractor for each logistics document that supplies the relevant logistics data to the worklist. This allows compatibility of the worklist with a plurality of different logistics documents and/or easy modification of the data processing system 1 to be compatible with a new type of logistics document. It will be readily appreciated that it is also possible that the interface between the worklist and a predetermined number of groups of electronic logistics documents is common (generic) within each group of electronic logistics documents. For example, the interface between the worklist and electronic goods movement logistics documents can be common for all electronic goods movement logistics documents, while there is a separate interface between the worklist and electronic delivery documents, which e.g. close an NCTS procedure.

In the example of Fig. 2 the method includes receiving logistics data at the first input interface 2 of the data processing system 1 and adapting, in accordance with the received logistics data, the worklist stored in the memory 12 of the data processing system 1 (step 126), e.g. providing a selection of data entries of the logistics document to the worklist. From said worklist at least one customs procedure selection parameter is extracted (step 128), e.g. a plurality of selection parameters. For each of mutually different types of logistics documents at least one customs procedure selection parameter can be selected from the worklist. The at least one procedure selection parameter is output at the first output interface 8 of the data processing system 1, e.g. to a screen so as to be readable for a user of the data processing system. The user can for instance manually select a selection parameter of the at least one selection parameter by using selection means 20, e.g. by pressing a button on a keyboard. A selected procedure selection parameter can be received at the third input interface 6 of the data processing system 1. In response to selecting one or more of said selection parameters, a customs procedure definition is selected from the repository 14 (step 128) based on the received procedure selection parameter. The selected customs procedure definition at least defines a customs declaration (shipment) document type suitable to be processed by a customs clearance processing system corresponding to the selected customs process. The customs clearance document is generated corresponding to the customs clearance document type of the selected customs procedure definition and provided at the second output interface 10 of the data processing system 1.

In the above example the decision what customs procedure definition needs to be applied is made manually. In a special embodiment the decision what customs procedure definition needs to be applied can be made by automatism, e.g. when running the worklist in background mode for the appropriate selection parameters. An appropriate customs procedure definition may be selected automatically e.g. on the basis of a prioritized list of selection parameters and/or on the basis of values of predetermined selection parameters. In this case the selection means 20 may form an integral part of the data processing system 1 or may be implemented in software code and/or stored in the memory 12. The first output interface 8 and the third input interface 6 may be omitted in this case. As the user need not select a procedure selection parameter in this case, no selected selection parameter needs to be received at the third input interface 6, and therefore, no selection parameters need to be presented to the user through first output 8. Instead, the selection means 20 can be internal to the data processing system 1, so that sending the selection parameters to the selection means and sending the selected selection parameter to the data processing system is all performed internally in the data processing system 1. Automatically selecting the customs procedure definition provides the advantage that the risk of human errors may be reduced and/or that the speed of processing customs procedures for received goods may be increased.

The customs declaration document can also be generated automatically by the data processing system 1. Thereto, the processor 16 is arranged to select from the logistics data customs data suitable for the selected electronic customs procedure, and to generate from the customs data a customs declaration document suitable to be processed by the associated electronic customs procedure. It is also possible that the customs declaration document is transmitted to the customs clearance declaration system 18 automatically once the customs declaration document has been generated within the data processing system 1. This provides the advantage that the customs declaration document can be available to the customs authority substantially immediately after it has been generated.

Returning to Figure 1, the data processing system 1 includes the first input interface 2 for receiving an electronic logistics document containing the logistics data of received goods, the second output interface 10 for providing the electronic customs declaration document and transmitting said electronic customs declaration document to the electronic customs clearance declaration system 18, the second input interface 4 for receiving customs clearance data from the electronic customs clearance declaration system, the memory 12 for storing said logistics data and the processor 16. The processor 16 is communicatively connected to the input interfaces, the memory, and said output interfaces. The processor 16 is arranged to extract from the logistics document logistics data, to derive from the extracted logistics data customs data related to a customs procedure, to generate for at least a part of the received goods an electronic customs declaration document containing the customs data, to provide said electronic customs declaration document at the second output interface 10, and to mark in accordance with the received clearance data the logistics data with a first marking to signal that the customs procedure has been completed when the clearance data indicate that the customs procedure has been completed.

The data processing system 1 further includes the repository 14 in which at least two customs procedure definitions are stored, which customs procedure definitions are each associated with at least one selection parameter and at least define a customs declaration document type suitable to be processed by an electronic customs clearance declaration system 18 corresponding to the customs procedure definition. The processor 16 is further arranged to select a customs procedure definition from the repository 14 and to generate a customs declaration document corresponding to the customs declaration document type of the selected customs procedure definition.

The data processing system 1 further includes the first output interface 8 for outputting the least one procedure selection parameter. The processor 16 is further arranged to adapt, in accordance with the received logistics data, a worklist stored in the memory 12 of the data processing system, to extract from said worklist at least one procedure selection parameter, to output said at least one procedure selection parameter at the first output interface 8 of the data processing system 1, to receive a selected procedure selection parameter at the third input interface 6 of the data processing system 1 and to select a customs procedure definition based on the received procedure selection parameter.

In an embodiment of the invention, the method includes inhibiting said processing of the logistics data of the received goods by the data processing system 1 until the customs clearance data indicate that the customs procedure has been completed and allowing said processing of the logistics data of the received goods by the data processing system 1, in case the customs clearance data indicate that the customs procedure has been completed. To achieve this, the processor 16 is arranged to inhibit a logistics process to be performed by the data processing system with received goods until the clearance data regarding the received goods indicate that the customs procedure has been completed. The processor may also be arranged to allow the logistics process to be performed by the processing system with received goods of which the clearance data indicate that the customs procedure has been completed. This provides the advantage that the logistics data of the received goods cannot be used in a logistics process as long as no customs clearance has been given for the received goods. This allows for secure handling of received goods for which customs charges are due. If the data processing system 1 is arranged to automatically handle customs clearance, the logistics data can be automatically marked by the processing system 1 to signal that the customs procedure has been completed immediately upon receiving the clearance data. It is then also possible to allow said processing of the logistics data by the data processing system 1 immediately upon receiving the clearance data. This provides the advantage that no time delay is experienced between receiving customs clearance and allowing the received goods to be used in the logistic process.

Within the data processing system 1, the logistics data may be provided with a second marking, which second marking signals that the customs procedure has not been completed. The second marking may be removed in case customs clearance data are received that indicate that the customs procedure has been completed. Removing the second marking when the customs procedure has been completed is also considered to be marking the logistics data with the first marking to signal that the customs procedure has been completed.

Alternatively, as adding the first marking to the logistics data signals that the customs procedure has been completed, not adding a first marking to the logistics data will signal that the customs procedure has not (yet) been completed. Thus, not adding a first marking to the logistics data can also be considered to be providing the logistics data with a second marking.

Change, use or manipulation of logistics data may be blocked until the customs procedure has been completed. Hence, change, use or manipulation of logistics data marked with the second marking may be blocked and change, use or manipulation of logistics data marked with the first marking may be allowed. The second marking can signal that the received goods are blocked or duty unpaid goods and/or the first marking can signal that the received goods are unblocked or duty paid goods. The logistics process can be allowed to be performed with the logistics data marked as unblocked. Marking the logistics data to signal that the customs procedure has been completed may also include transmitting the logistics data to a logistics system.

The customs authority may require that posting goods receipt is not allowed unless customs allows to do so. This means that the goods must be prevented from showing up in material inventory records until the customs authority (or the custom clearance declaration system 18) gives customs clearance for the received goods. In an embodiment wherein the logistics document is a goods receipt, providing the second marking to the logistics data may include transmitting the goods receipt into a buffer memory and retaining the goods receipt in the buffer memory until the customs procedure has been completed. Removing said second marking from and/or applying the first marking to the logistics data may include discharging the goods receipt from the buffer memory.

In an embodiment the method further includes receiving goods (physical entities). In this case the goods can be retained in blocked stock until the customs clearance data indicate that the customs procedure has been completed. The goods can be released from blocked stock when the customs clearance data indicate that the customs procedure has been completed.

In the following examples, the invention is applied to a system sold by the applicant under the name SAP Global Trade Services, which is a computer program suitable to be loaded and run by one or more programmable devices, such as general purpose computers, personal digital assistants (PDAs) or otherwise.

### example 1: Starting new customs procedure

Choosing a new customs procedure e.g. after having closed the transit procedure will be made out of the customs workload. This central worklist receives inbound logistics data that are necessary to create customs shipments documents in order to communicate with customs. The worklist is filled with data coming from a logistics document posted in the feeder system e.g. goods receipts. The interface structure between the feeder system and the SAP Global Trade Services system (SAP GTS) is common and suitable for all types of documents in the feeder system. You don't need a separate interface structure for each logistic document but only a separate data extractor for each document that supplies the interface with logistics data. In an alternative embodiment, you need an interface structure for each of a predetermined number of groups of electronic logistics documents.

The selection screen of the customs worklist functionally comprises all characteristics received from logistics as selection parameters. Hence, the decision what customs procedure needs to be applied can be made manually or by automatism when running the customs worklist in background mode for the appropriate selection parameters.

Referring to Figure 2, the logistics document is posted in the feeder system e.g. goods receipts (step 104). If it is determined that a customs declaration is required (step 106) the logistics data is extracted from the logistics document (step 110). The interface structure between the feeder system and the SAP Global Trade Services system (SAP GTS) is common and suitable for all types of documents in the feeder system. The extracted inbound logistics data that are necessary to create customs shipments documents in order to communicate with customs presented to the SAP GTS are stored in the worklist (step 126). The worklist is thus filled with data coming from the logistics document. From the worklist, selection parameters are extracted (step 128) and, in this example, shown in the selection screen. The selection screen of the customs worklist functionally comprises all characteristics received from logistics as selection parameters. Now, the decision what customs procedure needs to be applied can be made manually (step 124). The decision what customs procedure needs to be applied can also be made by automatism when running the customs worklist in background mode for the appropriate selection parameters. In the logistics document a customs reference number may be added and/or an identifier of the selected customs procedure. The logistics data may be marked with the second marking to signal that the customs procedure has not been completed at this point.

### example 2: Closing a transit procedure

Closing customs transit procedure is based on the inbound delivery document (IBD). In the SAP system, the inbound delivery document contains data about a process of receiving goods at a receiving area, such as the purchase order and the shipping notification. In the inbound delivery document a customs reference number is added. If this number got assigned to the IBD customs relevant data to the customs process to which the customs reference number refers will be transmitted to the SAP Global Trade Services system (SAP GTS) a customs shipment document (CSD) suitable to be processed by the associated customs process will be created. Based on the CSD the communication with customs takes place.

Customs may require that posting goods receipt is not allowed unless customs allows to do so. This means that the goods must be prevented from showing up in your material inventory records until customs gives green light. Within the integration steps this requirement will be satisfied by posting the goods receipt into blocked stock when a customs reference number got assigned to the IBD representing a transit procedure.

When SAP GTS receives customs permission, SAP GTS triggers the feeder system to post real goods receipt out of blocked stock by automatism.

Referring to Figure 2, when the appropriate customs procedure has been selected, as shown in example 1, in the inbound delivery document a customs reference number is added. If this customs reference number got assigned to the IBD, customs data, relevant to the customs process to which the customs reference number refers, will be transmitted to the SAP Global Trade Services system (SAP GTS). Based on the selected customs procedure and the logistics data, a customs shipment document (CSD) suitable to be processed by the associated customs process will be created (step 114). Based on the CSD the communication with customs takes place. i.e. the customs shipment document is transmitted to the customs authority (step 116) and customs clearance data is received from the customs authority (step 118). When customs clearance is received, the logistics data may be marked with a first marking to signal that the customs procedure has been completed (step 120).

Customs may require that posting goods receipt is not allowed unless customs allows to do so. This means that the goods must be prevented from showing up in your material inventory records until customs gives green light. Within the integration steps this requirement will be satisfied by posting the goods receipt into blocked stock. The goods receipt may be posted in blocked stock e.g. when the logistics data were marked with the second marking to signal that the customs procedure has not been completed, or when the customs reference number got assigned to the IBD, representing a transit procedure.

When SAP GTS receives customs permission, from the customs authority, SAP GTS triggers the feeder system to post real goods receipt out of blocked stock by automatism, e.g. by marking the logistics data with a first marking to signal that the customs procedure has been completed, so that the logistics process recognizes the logistics data as belonging to goods for which the customs procedure has been completed. Posting real goods receipt out of blocked stock by automatism provides the advantage that after receiving customs clearance the goods are immediately available for further logistic processing, without requiring action of the user.

It should be noted that the above-mentioned embodiments and examples illustrate rather than limit the invention, and that those skilled in the art will be able to design alternatives without departing from the scope of the appended claims. For example in the examples the worklist is stored in the memory of the data processing system. It is also possible that the worklist is stored in a memory of a customs procedure unit of the data processing system. In this case the method may include transferring (at least part of) the logistics data to the customs procedure unit.

## Claims

1. A method for performing a customs procedure, including:
- receiving at a first input interface of a data processing system an electronic logistics document, said logistics document containing logistics data of received goods;
- processing the logistics data in a logistics process performed by the data processing system;
- generating by the data processing system an electronic customs declaration; said generating including:
- extracting from the logistics document logistics data;
- deriving from the extracted logistics data customs data related to a customs procedure ; and
- generating for at least a part of the received goods by the data processing system an electronic customs declaration document containing the customs data;
said method further including:
- providing said electronic customs declaration document at an output interface of the data processing system;
- transmitting the electronic customs declaration document to an input interface of an electronic customs clearance declaration system;
- receiving, from said electronic customs clearance declaration system, clearance data regarding the received goods at a second input interface of the data processing system; and
- marking, within the data processing system, the logistics data with a first marking to signal that the customs procedure has been completed when the clearance data indicate that the customs procedure has been completed.

2. A method according to claim 1, including automatically determining from the logistics data whether or not a customs declaration is required for the received goods by means of the data processing system.

3. A method according to any one of the preceding claims, wherein generating the customs declaration includes:
- selecting a customs procedure definition from a repository stored in a memory of the data processing system, which customs procedure definition at least defines a customs declaration document type suitable to be processed by the electronic customs clearance declaration system corresponding to the selected customs procedure; and
- generating a customs declaration document corresponding to the customs declaration document type of the selected customs procedure definition.

4. A method according to claim 3, wherein the customs procedure definition is automatically selected from the repository.

5. A method according to claim 3 or 4, including adding an identifier of the selected customs procedure definition to the logistics data.

6. A method according to any one of the preceding claims, including:
- adapting, in accordance with the received logistics data, a worklist stored in a memory of the data processing system;
- extracting from said worklist at least one procedure selection parameter;
- outputting said at least one procedure selection parameter at an output interface of the data processing system;
- receiving a selected procedure selection parameter at an input interface of the data processing system; and
- selecting a customs procedure definition based on the received procedure selection parameter.

7. A method according to claim 6, wherein the worklist provides a common interface between at least one electronic logistics document and the data processing system.

8. A method according to claim 7, wherein the worklist provides a common interface between a predetermined number of groups of electronic logistics documents and the data processing system.

9. A method according to any one of claims 6-8, wherein the worklist is stored in a memory of a customs procedure unit of the data processing system, and wherein the method includes:
- transferring (at least part of) the logistics data to the customs procedure unit.

10. A method according to any one of the preceding claims, wherein the method includes automatically marking the logistics data to signal that the customs procedure has been completed when the received clearance data indicate that the customs procedure has been completed.

11. A method according to any one of the preceding claims, further including inhibiting processing of the logistics data by the data processing system until the customs clearance data indicate that the customs procedure has been completed.

12. A method according to any one of the preceding claims, including allowing processing of the logistics data by the data processing system, in case the customs clearance data indicate that the customs procedure has been completed.

13. A method according to any one of the preceding claims, including providing, within the data processing system, the logistics data with a second marking, which second marking signals that the customs procedure has not been completed, and removing the second marking in case customs clearance data are received that indicate that the customs procedure has been completed.

14. A method according to claim 13, wherein change, use or manipulation of logistics data marked with the second marking is blocked.

15. A method according to claim 13 or 14, wherein providing the logistics data with the second marking signals that the received goods are blocked or duty unpaid goods.

16. A method according to any one of claims 13-15, wherein the logistics document is a goods receipt and wherein said providing a second marking to the logistics data includes transmitting the goods receipt into a buffer memory and retaining the goods receipt in the buffer memory until the customs procedure has been completed.

17. A method according to claim 15 or 16, wherein removing said second marking from the logistics data or providing said first marking to the logistics data includes: discharging the goods receipt from the buffer memory.

18. A method according to any one of the preceding claims, wherein change, use or manipulation of logistics data marked with the first marking is allowed.

19. A method according to any one of the preceding claims, wherein providing the logistics data with the first marking signals that the received goods are unblocked or duty paid goods.

20. A method according to any one of the preceding claims, wherein, the method further comprises:
- receiving goods;
- retaining the goods in blocked stock until the customs clearance data indicate that the customs procedure has been completed;
- releasing the goods from blocked stock when the customs clearance data indicate that the customs procedure has been completed.

21. A data processing system, including:
- a first input interface for receiving an electronic logistics document containing logistics data of received goods;
- a second output interface for providing an electronic customs declaration document and transmitting said electronic customs declaration document to the electronic customs clearance declaration system;
- a second input interface for receiving customs clearance data from the electronic customs clearance declaration system;
- a memory for storing said logistics data;
- a processor communicatively connected to the input interfaces, the memory, and said output interfaces, said processor being arranged
- to extract from the logistics document logistics data;
- to derive from the extracted logistics data customs data related to a customs procedure;
- to generate for at least a part of the received goods an electronic customs declaration document containing the customs data;
- to provide said electronic customs declaration document at the second output interface, and
- to mark in accordance with the received clearance data the logistics data with a first marking to signal that the customs procedure has been completed when the clearance data indicate that the customs procedure has been completed.

22. A data processing system according to claim 21, further including a repository in which at least two customs procedure definitions are stored, which customs procedure definitions are each associated with at least one selection parameter and at least define a customs declaration document type suitable to be processed by an electronic customs clearance declaration system corresponding to the customs procedure definition, wherein said processor is further arranged
- to select a customs procedure definition from the repository; and
- to generate a customs declaration document corresponding to the customs declaration document type of the selected customs procedure definition.

23. A data processing system according to claim 21 or 22, further including a first output interface for outputting the least one procedure selection parameter, wherein said processor is further arranged
- to adapt, in accordance with the received logistics data, a worklist stored in a memory of the data processing system;
- to extract from said worklist at least one procedure selection parameter;
- to output said at least one procedure selection parameter at the first output interface of the data processing system;
- to receive a selected procedure selection parameter at a third input interface of the data processing system; and
- to select a customs procedure definition based on the received procedure selection parameter.

24. A data processing system, according to claim 22 or 23 wherein the processor is arranged to add an identifier of a selected customs procedure to the logistics data;

25. A data processing system, according to any one of claims 21-24, wherein the processor is arranged to mark the logistics data with a second marking to signal that a customs procedure has not been completed until the clearance data indicate that the customs procedure has been completed.

26. A data processing system according to any one of claims 21-25, wherein the processor is arranged to inhibit a logistics process to be performed by the data processing system with said logistics data until the clearance data regarding the received goods indicate that the customs procedure has been completed.

27. A data processing system to any one of claims 21-26, wherein the processor is arranged to allow a logistics process to be performed by the processing system with said logistics data in case the clearance data indicate that the customs procedure has been completed.

28. A computer program product, containing program code portions for performing a method as claimed in any one of claims 1-20 when run on a programmable apparatus.

29. An article comprising a machine-readable medium, stored with data representing instructions operable to cause one or more programmable machines to perform operations of a method as claimed in any one of claims 1-20.
